# EUROPÄISCHE PATENTSCHRIFT

(11) **EP 1 457 245 B1**
(45) Veröffentlichungstag und Bekanntmachung des Hinweises auf die Patenterteilung: **01.08.2018**
(21) Anmeldenummer: 04002382.2
(22) Anmeldetag: 04.02.2004
(51) Int. Cl.: B01D 39/16, D06M 15/21

(54) **Verwendung von wässrigen Bindemitteln bei der Herstellung von Filtermaterialien und Filtermaterialien**
Use of aqueous binders in the preparation of filter materials and filter materials
Utilisation de liants aqueux dans la préparation de matériaux filtrants et matériaux filtrants

(30) Priorität: 11.03.2003 DE 10310882
(43) Veröffentlichungstag der Anmeldung: 15.09.2004
(73) Patentinhaber: BASF SE, 67056 Ludwigshafen am Rhein (DE)
(72) Erfinder: Laubender, Matthias, Dr., 67105 Schifferstadt (DE); Gerst, Matthias, Dr., 67433 Neustadt (DE)
(74) Vertreter: BASF IP Association

(56) Entgegenhaltungen:
- EP-A- 1 018 523
- WO-A-01/27163

## Beschreibung

Die vorliegende Erfindung betrifft die Verwendung einer wäßrigen Polymerdispersion, enthaltend dispergierte Polymerteilchen mindestens eines Polymerisats A1, das erhältlich ist durch radikalische Emulsionspolymerisation in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers
als Bindemittel bei der Herstellung von Filtermaterialien.

Die Verfestigung von flächenförmigen Gebilden, beispielsweise Faservliesen oder Papieren, oder von Formkörpern, wie Faserplatten oder Spanplatten, erfolgt häufig auf chemischem Weg unter Verwendung eines polymeren Bindemittels. Die polymeren Bindemittel können u.a. in Form einer wäßrigen Lösung oder einer wäßrigen Dispersion verwendet werden.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583 086 sind beispielsweise wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

In der EP-A 882 074 werden Bindemittel für Formkörper beschrieben, welche aus einem durch radikalische Polymerisation erhaltenen Polymerisat aus einem ungesättigten Säureanhydrid oder einer ungesättigten Dicarbonsäure und einem Alkanolamin bestehen. Derartige Bindemittel werden u.a. auf Faservliesen aufgebracht, welche als Trägermaterialien in Beschichtungsprozessen dienen.

Gegenstand der DE-A 19949592 sind wäßrige Polymerlösungen, enthaltend gelöste Polymerteilchen aus mindestens einem Polymerisat aus ethylenisch ungesättigten Carbonsäuren und Estern von ungesättigten Carbonsäuren, sowie weiteren Monomeren. Derartige wäßrige Polymerlösungen werden ebenfalls u.a. als Bindemittel für Faservliese, beispielsweise aus Cellulose eingesetzt.

Aus der EP-A 882 074 und der DE-A 19949592 ist aber nicht bekannt, derartige wäßrige Lösungen bzw. derartige wäßrige Polymerdispersionen als Bindemittel zur Herstellung von Filtermaterialien einzusetzen.

Bindemittel für Filtermaterialien wie beispielsweise Filterpapier oder Filtergewebe müssen dem Substrat u.a. eine hohe mechanische Stabilität verleihen (Reißfestigkeit, Berstfestigkeit), insbesondere nach Lagerung im Feuchtklima und bei erhöhter Temperatur. Darüber hinaus müssen derartige Bindemittel eine hohe chemische Resistenz, beispielsweise bei Einwirkung von Lösungsmitteln, gewährleisten und sollten die Durchlässigkeit (Porengröße) des Filtermaterials möglichst nicht bzw. nur gering beeinflussen.

In der Filtermaterialherstellung erwiesen sich bisher Bindemittel mit einem sehr hohen Anteil an Säuregruppen gelegentlich als nachteilig, da damit verfestigte Filtermaterialien auf Basis von Cellulosefasern mitunter eine verminderte Standfestigkeit aufweisen, die sich u.a. in einer verringerten Berstfestigkeit im Langzeittest oder nach Lagerung bei erhöhter Temperatur äußert.

Der vorliegenden Erfindung lag daher die Aufgabe zu Grunde, den geschilderten Nachteilen abzuhelfen und ein verbessertes Bindemittel für Filtermaterialien bereit zu stellen, welches sich u.a. durch eine hohe mechanische Stabilität und chemische Resistenz auszeichnet und die Durchlässigkeit der Filtermaterialien möglichst nicht beeinflußt. Darüber hinaus erstreckt sich die vorliegende Erfindung auch auf die mit den verbesserten Bindemitteln versehenen Filtermaterialien.

Demgemäß wurde die Verwendung einer wäßrigen Polymerdispersion enthaltend dispergierte Polymerteilchen mindestens eines Polymerisats A1, das erhältlich ist durch radikalische Emulsionspolymerisation in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers
als Bindemittel für die Herstellung von Filtermaterialien gefunden.

Im Zusammenhang mit den Monomerkomponenten des Polymerisats A1 steht Alkyl im Folgenden vorzugsweise für geradkettige oder verzweigte C₁-C₂₂-Alkylreste, insbesondere C₁-C₁₂- und besonders bevorzugt C₁-C₆-Alkylreste, wie Methyl, Ethyl, n-Propyl, n-Butyl, sek.-Butyl, tert.-Butyl, n-Pentyl, n-Hexyl, 2-Ethylhexyl, n-Dodecyl oder n-Stearyl.

Hydroxyalkyl steht vorzugsweise für Hydroxy-C₁-C₆-alkyl, wobei die Alkylreste geradkettig oder verzweigt sein können, und insbesondere für 2-Hydroxyethyl, 2- oder 3-Hydroxypropyl, 2-Methyl-2-hydroxypropyl und 4-Hydroxybutyl.

Cycloalkyl steht vorzugsweise für C₅-C₇-Cyclohexyl, insbesondere Cyclopentyl und Cyclohexyl.

Aryl steht vorzugsweise für Phenyl oder Naphthyl.

Das Polymerisat A1 stellt ein radikalisches Emulsionspolymerisat dar. Zu dessen Herstellung können alle durch radikalische Polymerisation polymerisierbaren Monomere eingesetzt werden. Im Allgemeinen ist das Polymerisat aufgebaut aus
- 80 bis 100 Gew.-%, bevorzugt 85 bis 99,9 Gew.-%, bezogen auf das Gesamtgewicht der Monomere für das Polymerisat, wenigstens eines ethylenisch ungesättigten Hauptmonomeren sowie
- 0 bis 20 Gew.-%, bevorzugt 0,1 bis 15 Gew.-%, bezogen auf das Gesamtgewicht der Monomere für das Polymerisat, wenigstens eines ethylenisch ungesättigten Comonomeren.

Das Hauptmonomer ist vorzugsweise ausgewählt unter
- Estern aus vorzugsweise 3 bis 6 C-Atomen aufweisenden α,β-monoethylenisch ungesättigten Mono- oder Dicarbonsäuren, wie Acrylsäure, Methacrylsäure, Maleinsäure, Fumarsäure und Itaconsäure mit C₁-C₁₂-, vorzugsweise C₁-C₈-Alkanolen. Derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat;
- vinylaromatischen Verbindungen, bevorzugt Styrol, α-Methylstyrol, o-Chlorstyrol, Vinyltoluolen;
- Vinylestern von C₁-C₁₈-Mono- oder Dicarbonsäuren, wie Vinylacetat, Vinylpropionat, Vinyl-n-butyrat, Vinyllaurat und/oder Vinylstearat;
- Butadien;
- linearen 1-Olefinen, verzweigtkettigen 1-Olefinen oder cyclischen Olefinen, wie z. B. Ethen, Propen, Buten, Isobuten, Penten, Cyclopenten, Hexen oder Cyclohexen. Des Weiteren sind auch Metallocen-katalysiert hergestellte Oligoolefine mit endständiger Doppelbindung, wie z. B. Oligopropen oder Oligohexen geeignet;
- Acrylnitril, Methacrylnitril;
- Vinyl- und Allylalkylethern mit 1 bis 40 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinylether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether
bzw. Mischungen davon.

Besonders bevorzugte Hauptmonomere sind Styrol, Methylmethacrylat, n-Butylacrylat, Ethylacrylat, 2-Ethylhexylacrylat, Vinylacetat, Ethen und Butadien,
bzw. Mischungen davon.

Das Comonomer ist vorzugsweise ausgewählt unter
- ethylenisch ungesättigten Mono- oder Dicarbonsäuren oder deren Anhydriden, vorzugsweise Acrylsäure, Methacrylsäure, Methacrylsäureanhydrid, Maleinsäure, Maleinsäureanhydrid, Fumarsäure und/oder Itaconsäure;
- Acrylamiden und alkylsubstituierten Acrylamiden, wie z. B. Acrylamid, Methacrylamid, N,N-Dimethylacrylamid, N-Methylolmethacrylamid, N-tert.-Butylacrylamid, N-Methylmethacrylamid;
- sulfogruppenhaltigen Monomeren, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;
- C₁-C₄-Hydroxyalkylestern von C₃-C₆-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten C₁-C₁₈-Alkoholen mit den erwähnten Säuren, wie z. B. Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol;
- Vinylphosphonsäuren und deren Salzen, Vinylphosphonsäuredimethylester und anderen phosphorhaltigen Monomeren;
- Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylat-chlorid, 3-(N,N-Dimethyl-amino)-propyl(meth)acrylat, 2-Dimethylaminoethyl(meth)acrylamid, 3-Dimethylaminopropyl(meth)acrylamid, 3-Trimethylammoniumpropyl(meth)acrylamid-chlorid;
- Allylestern von C₁-C₃₀-Monocarbonsäuren;
- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;
- Diallyldimethylammoniumchlorid, Vinylidenchlorid, Vinylchlorid, Acrolein, Methacrolein;
- 1,3-Diketogruppen enthaltenden Monomeren, wie z. B. Acetoacetoxyethyl(meth)acrylat oder Diacetonacrylamid, harnstoffgruppenhaltigen Monomeren, wie Ureidoethyl(meth)acrylat, Acrylamidoglykolsäure, Methacrylamidoglykolatmethylether;
- Silylgruppen enthaltenden Monomeren, wie z. B. Trimethoxysilylpropylmethacrylat;
- Glycidylgruppen enthaltenden Monomeren, wie z. B. Glycidylmethacrylat
bzw. Mischungen davon.

Besonders bevorzugte Comonomere sind Hydroxyethylacrylat, Hydroxypropylacrylat, Hydroxybutylacrylat, Hydroxyethylmethacrylat und Mischungen davon. Ganz besonders bevorzugt sind Hydroxyethylacrylat und Hydroxyethylmethacrylat, insbesondere in Mengen von 2 bis 20 Gew.-%, bezogen auf das Gesamtmonomere A1.

Das Polymerisat A2 enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist das Polymerisat A2 zu mehr als 10 g/l (bei 25 °C) in Wasser löslich.

Brauchbare ethylenisch ungesättigte Carbonsäuren wurden bereits vorstehend im Zusammenhang mit dem Polymerisat A1 genannt. Bevorzugte Carbonsäuren sind C₃- bis C₁₀-Monocarbonsäuren und C₄- bis C₈-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats A2 können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat A2 enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Das Polymer A2 liegt vorzugsweise als Kammpolymer mit kovalent gebundenen Aminseitenketten vor.

Als Komponente der Ester geeignete Monocarbonsäuren sind die zuvor genannten C₃- bis C₁₀-Monocarbonsäuren, insbesondere Acrylsäure, Methacrylsäure, Crotonsäure, und Mischungen davon.

Als Komponente der Halbester und Diester geeignete Dicarbonsäuren sind die zuvor genannten C₄- bis C₈-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt unter sekundären und tertiären Aminen, die wenigstens einen C₆- bis C₂₂-Alkyl-, C₆- bis C₂₂-Alkenyl-, Aryl-C₆- bis C₂₂-alkyl- oder Aryl-C₆- bis C₂₂-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat A2 eine ungesättigte Verbindung auf Basis einer Aminkomponente eingebaut, die wenigstens ein Amin der allgemeinen Formel (I)

R^{c}NR^{a}R^{b} (I)

enthält, wobei
- R^{c}: für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
- R^{a}: für Hydroxy-C₁-C₆-alkyl oder einen Rest der Formel II

-(CH₂CH₂O)ₓ(CH₂CH(CH₃)O)_{y}-H (II)

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,
- R^{b}: für Wasserstoff, C₁- bis C₂₂-Alkyl, Hydroxy-C₁-C₆-alkyl, C₆-bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann, oder R^{b} für einen Rest der Formel III

-(CH₂CH₂O)ᵥ(CH₂CH(CH₃)O)_{w}-H (III)

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht R^{c} für C₈- bis C₂₀-Alkyl oder C₈- bis C₂₀-Alkenyl, wobei der Alkenylrest 1,2 oder 3 nicht benachbarte Doppelbindungen aufweisen kann. Vorzugsweise steht R^{c} für den Kohlenwasserstoffrest einer gesättigten oder ein- oder mehrfach ungesättigten Fettsäure. Bevorzugte Reste R^{c} sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte C₁₄-, C₁₆- und C₁₈-Alkylamine enthalten oder Kokosamine, die gesättigte, einfach und zweifach ungesättigte C₆-C₂₂-, vorzugsweise C₁₂-C₁₄-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox®-Marken der Fa. Ceca, bevorzugt ethoxylierte Oleylamine, wie Noramox® 05 (5 EO-Einheiten), sowie die unter der Marke Lutensol®FA vertriebenen Produkte der Fa. BASF AG.

Die Einpolymerisierung der vorgenannten Ester, Halbester und Diester bewirkt im Allgemeinen eine ausgeprägte Stabilisierung der erfindungsgemäß zu verwendenden Polymerdispersionen. Diese behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und (C₁- bis C₄)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den erfindungsgemäß eingesetzten Polymerisaten A2 ohne Zwischenisolierung der Ester und vorzugsweise nacheinander im selben Reaktionsgefäß.

Bevorzugt wird zur Herstellung der Polymerisate A2 ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/ oder Diester kann das Polymerisat A2 noch 0 bis 20 Gew.-%, bevorzugt 0,1 bis 10 Gew.-%; andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl (meth)acrylat, n-Butyl(meth)acrylat, 2-Ethylhexyl(meth)acrylat und Mischungen davon besonders bevorzugt sind.

Die Herstellung der Polymerisate A2 erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der Polymerdispersionen näher beschrieben werden. Die Polymerisate A2 können gewünschtenfalls separat hergestellt und nach üblichem Verfahren isoliert und/oder gereinigt werden. Bevorzugt werden die Polymerisate A2 unmittelbar vor der Herstellung der erfindungsgemäß zu verwendenden Polymerdispersionen hergestellt und ohne Zwischenisolierung für die Dispersionspolymerisation eingesetzt.

Die Herstellung der Polymerisate A2 kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Geeignete ethylenisch ungesättigte Mono- und Dicarbonsäuren sind die zuvor als Komponente der Polymerisate A1 und A2 genannten. Geeignete Amine, die wenigstens eine Hydroxylgruppe aufweisen, sind ebenfalls die zuvor genannten. Die Säuren können in dem zur polymeranalogen Umsetzung eingesetzten Polymerisat gewünschtenfalls teilweise oder vollständig in Form eines Derivates, bevorzugt eines C₁- bis C₆-Alkylesters, vorliegen.

Die Herstellung der Polymerisate A2 durch polymeranaloge Umsetzung erfolgt vorzugsweise in einem geeigneten nichtwässrigen Lösungsmittel oder in Substanz. Bei der Umsetzung in Substanz kann die Aminkomponente gegebenenfalls im Überschuss eingesetzt werden, um als Lösungsmittel zu dienen. Bevorzugt sind Lösungsmittel, die mit Wasser ein Azeotrop bilden und somit eine einfache Entfernung des bei der Reaktion gebildeten Wassers ermöglichen. Vorzugsweise erfolgt die Umsetzung in Gegenwart eines Veresterungskatalysators, wie zuvor beschrieben. Die Reaktionstemperatur liegt bevorzugt in einem Bereich von 100 bis 200 °C. Bei der Reaktion gebildetes Wasser kann durch geeignete Maßnahmen, wie z.B. Abdestillieren, entfernt werden.

Das Gewichtsverhältnis von Polymerisat A1 zu Polymerisat A2, auf Feststoffbasis, liegt vorzugsweise im Bereich von 9:1 bis 1:9, insbesondere 3:1 bis 1:3.

Neben den Polymerisaten A1 und A2 können die erfindungsgemäßen Latices noch 0 bis 50 Gew.-%, bevorzugt 0,1 bis 40 Gew.-%, bezogen auf das Polymerisat A2, mindestens eines oberflächenaktiven, alkoxylierten, bevorzugt ethoxylierten oder propoxylierten, Alkylamins enthalten. Bevorzugte Alkylamine sind die Alkylamine der Formel R^{c}NR^{a}R^{b}, wie zuvor definiert, die auch in dem Polymerisat A2 enthalten sind, wobei Alkylamine der Formel 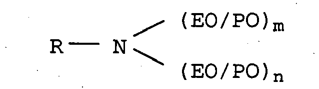 in der R ein Alkyl-, Alkenyl- oder Alkylvinylrest mit mindestens 6 Kohlenstoffatomen darstellt und m und n unabhängig voneinander ≥ 1 sind, besonders bevorzugt sind. Bevorzugte Reste R weisen 8 bis 22 Kohlenstoffatome auf.

Die in dem Polymerisat A2 enthaltenen alkoxylierten Alkylamine und die zusätzlichen Alkylamin-Vernetzer können gleiche oder verschiedene Verbindungen sein.

Gewünschtenfalls kann die erfindungsgemäß einzusetzende Polymer-dispersion noch weitere Vernetzer enthalten, beispielsweise einen Amin- oder Amid-Vernetzer mit mindestens zwei Hydroxylgruppen. Geeignete Vernetzer sind insbesondere die in der DE-A 197 29 161 offenbarten Alkanolamine, die hiermit durch Bezugnahme zum Offenbarungsgehalt der vorliegenden Erfindung gemacht werden.

Als Vernetzer eignen sich weiter vorzugsweise β-Hydroxyalkylamine der Formel 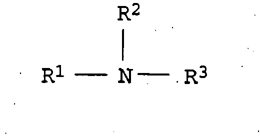 wobei R¹ für ein H-Atom, eine C₁- bis C₁₀-Alkylgruppe, eine C₁-bis C₁₀-Hydroxyalkylgruppe oder einen Rest der Formel IV

-(CH₂CH₂O)ₓ(CH₂CH(CH₃)O)_{y}-H (IV)

steht, wobei
in der Formel IV die Reihenfolge der Alkylenoxideinheiten beliebig ist und x und y unabhängig voneinander für eine ganze Zahl von 0 bis 100 stehen, wobei die Summe aus x und y > 1 ist und R² und R³ unabhängig voneinander für eine C₁- bis C₁₀-Hydroxyalkylgruppe stehen.

Besonders bevorzugt stehen R² und R³ unabhängig voneinander für eine C₂- bis C₅-Hydroxyalkylgruppe und R¹ für ein H-Atom, eine C₁-bis C₅-Alkylgruppe oder eine C₂- bis C₅-Hydroxyalkylgruppe.

Besonders bevorzugt sind Diethanolamin, Triethanolamin, Diisopropanolamin, Triisopropanolamin, Methyldiethanolamin, Butyldiethanolamin und Methyldiisopropanolamin, insbesondere Triethanolamin.

Weitere bevorzugte β-Hydroxyalkylamine sind die in der DE-A 196 21 573 als Komponente A offenbarten Amine, die hiermit durch Bezugnahme zum Offenbarungsgehalt der vorliegenden Erfindung gemacht werden. Dazu zählen vorzugsweise lineare oder verzweigte aliphatische Verbindungen, die pro Molekül mindestens zwei funktionelle Aminogruppen vom Typ (a) oder (b) aufweisen 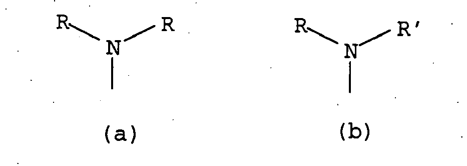 worin R für Hydroxyalkyl steht und R' für Alkyl steht, ist, bevorzugt eine Verbindung der Formel I' 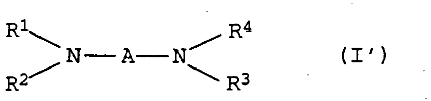 worin
- A: für C₂-C₁₈-Alkylen steht, das gegebenenfalls substituiert ist durch ein oder mehrere Gruppen, die unabhängig voneinander ausgewählt sind unter Alkyl, Hydroxyalkyl, Cycloalkyl, OH und NR⁶R⁷, wobei R⁶ und R⁷ unabhängig voneinander für H, Hydroxyalkyl oder Alkyl stehen,
und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/ oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 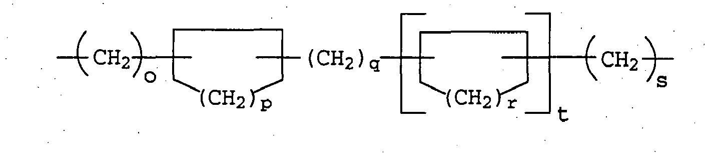 worin
o, q und s unabhängig voneinander für 0 oder eine ganze Zahl von 1 bis 6 stehen,
p und r unabhängig voneinander für 1 oder 2 stehen und t für 0,1 oder 2 steht,
wobei die cycloaliphatischen Reste auch durch 1, 2 oder 3 Alkylreste substituiert sein können und
R¹, R² und R³ und R⁴ unabhängig voneinander für H, Hydroxyalkyl, Alkyl oder Cycloalkyl stehen.

Bevorzugte höherfunktionelle β-Hydroxyalkylamine sind insbesondere mindestens zweifach ethoxylierte Amine mit einem Mol-Gewicht von unter 1 000 g/mol, wie z. B. Diethanolamin, Triethanolamin und ethoxyliertes Diethylentriamin, bevorzugt stöchiometrisch ethoxyliertes Diethylentriamin, d. h. Diethylentriamin, worin alle NH-Wasserstoffatome im Mittel einfach ethoxyliert sind.

Gut geeignete zusätzliche Vernetzer sind auch β-Hydroxyalkylamide, bevorzugt die in der US-A-5 143 582 genannten β-Hydroxyalkylamide der Formel

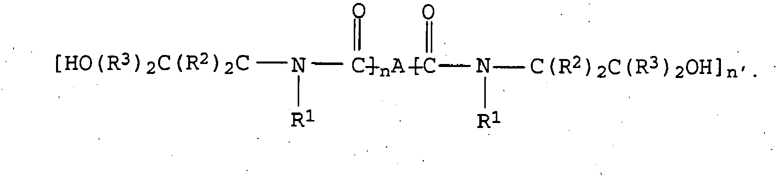

Besonders bevorzugt sind die β-Hydroxyalkylamide der vorstehenden Formel, in der R¹ Wasserstoff, eine kurzkettige Alkylgruppe oder HO(R³)₂C(R²)₂C-, n und n' jeweils 1, -A- eine -(CH₂)ₘ-Gruppe, m 0 bis 8, bevorzugt 2 bis 8, R² jeweils Wasserstoff, und eine der R³-Gruppen jeweils Wasserstoff und die andere Wasserstoff oder C₁-C₅-Alkyl sind. Besonders bevorzugt ist Bis[N,N-di(2-hydroxyethyl)]adipinsäureamid.

Die Zugabe des Vernetzers bewirkt im Allgemeinen eine bessere Härtung der erfindungsgemäß zu verwendenden Zusammensetzungen bei gegebener Härtungstemperatur bzw. eine Aushärtung bei niedriger Temperatur bei vorgegebener Härtungszeit. Der Gewichtsanteil des Vernetzers relativ zur Summe aus Polymerisat A1 und A2 beträgt 0 bis 50 Gew.-%, vorzugsweise 0,1 bis 30 Gew.-%.

Weiterhin kann in den erfindungsgemäß zu verwendenden Polymerdispersionen ein Reaktionsbeschleuniger zugesetzt werden. Bevorzugt sind dabei phosphorhaltige Verbindungen, insbesondere hypophosphorige Säure sowie deren Alkali- und Erdalkalisalze oder Alkali-Tetrafluoroborate. Auch Salze von Mn(II), Ca(II), Zn(II), Al (III), Sb(III) oder Ti(IV) oder starke Säuren, wie para-Toluolsulfonsäure, Trichloressigsäure und Chlorsulfonsäure, können als Reaktionsbeschleuniger zugesetzt werden. Der Gewichtsanteil des Reaktionsbeschleunigers relativ zur Summe aus Polymerisat A1 und A2 beträgt 0,1 bis 5 Gew.-%, vorzugsweise 0,1 bis 2 Gew.-%.

Besonders bevorzugte Zusammensetzungen der erfindungsgemäß zu verwendenden Polymerdispersionen sind

| | | | | |
|---|---|---|---|---|
| 70 | bis | 45 | Gew.-% | Polymerisat A1, |
| 25 | bis | 55 | Gew.-% | Polymerisat A2 und gegebenenfalls |
| 0 | bis | 10 | Gew.-% | oberflächenaktives alkoxyliertes Alkylamin, |
| 0 | bis | 30 | Gew.-% | hydroxylgruppenhaltiger Vernetzer, |
| 0 | bis | 5 | Gew.-% | Reaktionsbeschleuniger. |

Die Herstellung der erfindungsgemäß zu verwendenden Polymerdispersion erfolgt vorzugsweise durch wässrige Emulsionspolymerisation, wobei eine batch-, eine semi-kontinuierliche oder eine kontinuierliche Fahrweise möglich ist. Es erwies sich als vorteilhaft, das Polymerisat A2 zusammen mit den Monomeren des Polymerisats A1 in Form eines Emulsionszulaufes in das Reaktionsgefäß zuzudosieren. Gewünschtenfalls können die das Polymerisat A1 bildenden Monomere und das Polymerisat A2 teilweise oder vollständig über zwei oder mehrere getrennte Zuläufe und gegebenenfalls ohne innige Vermischung über gemeinsame oder mehrere gegebenenfalls getrennte Zuläufe dem Reaktionsgefäß zugeführt werden. Die Monomeren können sowohl in voremulgierter als auch in nichtvoremulgierter Form dem Reaktionsgefäß zugeführt werden. Nach einer bevorzugten Ausführungsform wird wenigstens ein Teil des Polymerisats A2 zusammen mit wenigstens einer Monomerkomponente von A1 dem Reaktionsgefäß zugeführt. Vorteilhafterweise werden dabei im Allgemeinen wässrige Polymerdispersionen erhalten, die eine geringere Viskosität aufweisen, als herkömmliche Dispersionen. Das Polymerisat A2 kann teilweise oder vollständig als Reaktorvorlage verwendet werden und in Teilmengen auch nach Reaktionsende zugegeben werden. Die Verwendung einer definierten Menge eines Saat-Latex als Reaktorvorlage ist für die erfindungsgemäß einzusetzenden Polymerdispersionen vorteilhaft zur gezielten Einstellung einer Teilchengrößenverteilung. Dabei können 0 bis 25 Gew.-%, bevorzugt 0,1 bis 10 Gew.-%, bezogen auf das Polymerisat A1, eines geeigneten Saat-Latex Verwendung finden.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Das Polymerisat A1 wird also durch wässrige Emulsionspolymerisation in Gegenwart des Polymerisats A2 und, sofern enthalten, bevorzugt in Gegenwart eines oberflächenaktiven Amins, wie zuvor beschrieben, hergestellt.

Den zu verwendenden Dispersionen können Emulgatoren zugesetzt werden.

Vorzugsweise werden den erfindungsgemäß zu verwendenden Dispersionen keine zusätzlichen Emulgatoren zugesetzt.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z.B. H₂O₂/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05 bis 5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9.000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomere® der Th. Goldschmidt AG). Die Vernetzer werden vorzugsweise in Mengen von 10 ppm bis 5 Gew.-%, bezogen auf die zu polymerisierenden Monomere, eingesetzt.

Als Vernetzungsbeschleuniger können u.a. phosphorhaltige Verbindungen, insbesondere phosphorige und hypophosphorige Säuren und deren Salze verwendet werden.

Zusätzlich zu den genannten Bestandteilen können in den wäßrigen Polymerdispersionen übliche Zusätze je nach Anwendungszweck enthalten sein.

Die in der wäßrigen Polymerdispersion gegebenenfalls zusätzlich enthaltenen Komponenten werden üblicherweise nach dem Ende der Emulsionspolymerisation zugegeben.

Die erfindungsgemäß zu verwendenden wäßrigen Polymerdispersionen können zur Modifikation verschiedener Eigenschaftsmerkmale auch mit einer oder mehreren anderen Polymerdispersionen, Polymerlösungen oder Polymerpulvern gemischt werden.

Ferner ist zur Modifikation die Zumischung weiterer Mischungskomponenten möglich, u.a. von organischen Komponenten wie z.B. Epoxy-funktioneller Komponenten, Formaldehydharze, Komponenten mit Isocyanat- oder Urethangruppen, amino-, carboxy- oder hydroxyfunktionalisierte Mono- oder Disilan- bzw. -siloxanverbindungen, oder anderer substituierter oder nicht substituierter Kohlenwasserstoffverbindungen.

Desweiteren können zu den wässrigen Polymerdispersionen zusätzlich auch anorganische Komponenten zugegeben werden (Füllstoffe, Rheologieadditive, Haftvermittler, Vernetzungsbeschleuniger, etc.). Beispielhaft zu nennen sind Pigmente, Füllstoffe, Salze, Oxide.

Die erfindungsgemäß zu verwendenden Polymerdispersionen können bei Bedarf auch mehrere der zuvor genannten Mischkomponenten gleichzeitig enthalten.

Weiter können die wäßrigen Polymerdispersionen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten. Das Einmischen dieser Füllstoffe kann auch durch Induktionserwärmung erfolgen, was die Aushärtung erleichtert.

Darüber hinaus kann es sich empfehlen, für eine schnellere Vernetzung bei tieferen Temperaturen noch bestimmte Epoxidverbindungen hinzuzufügen beispielsweise di-oder trifunktionelle Glycidylether wie Bisphenol-A-diglycidylether oder Butandioldiglycidylether, also vor allem aromatische und aliphatische Glycidylether. Weiter geeignete Epoxidverbindungen sind cycloaliphatische Glycidylverbindungen, heterocyclische Glycidylverbindungen und cycloaliphatische Epoxidharze.

Schließlich können die wäßrigen Polymerdispersionen übliche Brandschutzmittel, wie z. B. Aluminiumsilikate, Aluminiumhydroxide, Borate und/oder Phosphate enthalten.

Häufig enthalten die wäßrigen Polymerdispersionen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die wäßrigen Polymerdispersionen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die wäßrigen Polymerdispersionen sind formaldehydfrei. Formaldehydfrei bedeutet, dass die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd.

Die formaldehydfreien, wäßrigen Polymerdispersionen sind vor der Anwendung im Wesentlichen unvernetzt und daher thermoplastisch. Wenn erforderlich, kann jedoch ein geringer Grad an Vorvernetzung des Polymerisats A1 eingestellt werden, z. B. durch Verwendung von Monomeren mit zwei oder mehr polymerisierbaren Gruppen.

Die erfindungsgemäß einzusetzenden, wäßrigen Dispersionen bestehen im Wesentlichen aus feinteiligen Emulsionspolymerisatteilchen von A1 und einer wässrigen Phase, enthaltend das Polymerisat A2 sowie gegebenenfalls separat zugesetztes oder bei der Veresterung nicht umgesetztes Amin, sowie gegebenenfalls weitere wasserlösliche Additive, z.B. Vernetzer.

Dabei kann es in der wässrige Phase zur Ausbildung von Überstrukturen kommen, wie z. B. von durch lamellare oder kugelförmige Aggregate gebildeten lyotropen Phasen.

Die Monomerzusammensetzung wird im Allgemeinen so gewählt, dass für das Polymerisat A1 eine Glasübergangstemperatur Tg im Bereich von -60 °C bis +150 °C resultiert. Die Glasübergangstemperatur Tg der Polymerisate kann in bekannter Weise z. B. mittels Differential Scanning Calorimetry (DSC) ermittelt werden. Die Tg kann auch mittels der Fox-Gleichung näherungsweise berechnet werden. Nach Fox T. G., Bull. Am. Physics Soc. 1,3, Seite 123 (1956) gilt: 1/Tg = x₁/Tg₁ + x₂/Tg₂ + ... + xₙ/Tgₙ, wobei xₙ für den Massebruch (Gew.-%/100) des Monomers n steht, und Tgₙ die Glasübergangstemperatur in Kelvin des Homopolymers des Monomeren n ist. Tg-Werte für Homopolymerisate sind in Polymer Handbook 3rd Edition, J. Wiley & Sons, New York (1989) aufgeführt. Für die Weiterverarbeitung zu Filtermaterialien liegt die Glasübergangstemperatur vorzugsweise in einem Bereich von -50 bis +90 °C.

Die erfindungsgemäß einzusetzenden, wäßrigen Polymerdispersionen stellen feinteilige, stabile Latices dar. Die gewichtsmittlere Teilchengröße der Latexpartikel beträgt etwa 10 bis 1 500 nm, bevorzugt 20 bis 1 000 nm, besonders bevorzugt 30 bis 500 nm, gemessen mit Hilfe der analytischen Ultrazentrifuge (AUZ).

Die erfindungsgemäß einzusetzenden, wäßrigen Polymerdispersionen können mit Wasser oder verdünnten Salz- bzw. Tensid-Lösungen unbegrenzt verdünnt werden, ohne dass es zu einem Koagulieren der Latex-Partikel kommt. Sie haben einen Gehalt an nicht flüchtigen Anteilen (Feststoffgehalt) im Bereich von etwa 20 bis 75 Gew.-%, bevorzugt 25 bis 65 Gew.-%. Die Viskosität (bei einem Feststoffgehalt von 40 Gew.-%) liegt im Allgemeinen in einem Bereich von etwa 10 bis 4 000 mPas, gemessen mit einem Rotationsviskosimeter gemäß DIN 53019 bei 23 °C und einer Schergeschwindigkeit von 250 s⁻¹.

Die erfindungsgemäß zu verwendenden wässrigen Polymerdispersionen können auch nach vorheriger Verdünnung mit Wasser dem Filtermaterial zugesetzt werden. Ferner kann es vorteilhaft sein, die wässrigen Polymerdispersionen in Abmischung mit wasserverträglichen Lösungsmitteln wie zum Beispiel Alkoholen, insbesondere Methanol, Ethanol oder dergleichen zu applizieren. Die wässrigen Polymerdispersionen weisen insbesondere eine gute Verträglichkeit gegenüber diesen Lösungsmitteln auf. Die Applikation aus wässriger Phase stellt jedoch einen weiteren Vorteil der erfindungsgemäßen Bindemitteldispersion gegenüber lösemittelhaltigen Systemen dar.

Die beschriebenen wäßrigen Polymerdispersionen werden erfindungsgemäß als Bindemittel für die Herstellung von Filtermaterialien, insbesondere von Filterpapieren oder Filtergeweben, verwendet. Gewebematerialien können beispielsweise sein Cellulose, Baumwolle, Polyester, Polyamid, PE, PP, Glasvliese, Glaswolle. Dabei kann es sich empfehlen, die wässrigen Polymerdispersionen vor dem Auftragen auf das entsprechende Papier oder Gewebe durch Zugabe von verschiedenen anorganischen oder organischen Basen auf einen pH-Wert von 2 bis 8, insbesondere von 3,0 bis 6,5 einzustellen. Geeignete Basen sind u.a. Triethanolamin, Diethanolamin, Monoethanolamin, Hydroxyalkylamine, Ammoniak, organische mono- oder polyfunktionelle Amine, Alkoholate sowie Metallalkylverbindungen, aber auch anorganische Basen wie zum Beispiel Natronlauge oder Kaliumhydroxid. Durch das Einstellen des pH-Wertes auf den angegebenen Wertebereich wird u.a. das Abfallen der Berstfestigkeit nach Lagerung oder thermischer Belastung reduziert und somit eine hohe Wärmestandfestigkeit erreicht.

Das Auftragen der erfindungsgemäß zu verwendenden Polymerdispersion auf die Filtermaterialien, also u.a. auf Filterpapier oder Filtergewebe erfolgt vorzugsweise nach dem sogenannten Tränkverfahren oder durch Aufsprühen. Dabei werden die wässrigen Polymerdispersionen durch Beleimen auf die Filtermaterialien aufgebracht. Es empfiehlt sich, nach dem Beleimen der Filtermaterialien mit den wässrigen Polymerdispersionen diese noch 0,1 bis 60 Minuten lang, insbesondere 1 bis 60 Minuten lang bei Temperaturen von 100 bis 250°C, insbesondere von 110 bis 220°C zu tempern, d.h. zu härten.

Die erfindungsgemäße Verwendung der wäßrigen Polymerdispersion als Bindemittel für Filtermaterialien hat zur Folge, dass die behandelten Filtermaterialien u.a. eine erhöhte mechanische Stabilität aufweisen (höhere Reissfestigkeit und Berstfestigkeit), insbesondere nach Lagerung im Feuchtklima und bei erhöhter Temperatur. Weiterhin bewirkt die erfindungsgemäße Verwendung der wässrigen Bindemittel, dass die erhaltenen Filtermaterialien u.a. durch eine hohe chemische Resistenz, beispielsweise gegenüber Lösungsmitteln, gekennzeichnet sind, ohne dass dabei die Durchlässigkeit (Porengröße) des Filtermaterials beeinflußt wird. Durch die Verwendung der wässrigen Polymerdispersionen beobachtet man auch, dass diese den Filtermaterialien bereits nach der Trocknung eine hohe Festigkeit verleihen (Trockenreissfestigkeit), wobei sich aber die Filtermaterialien auch nach der Trocknung unterhalb der Härtungstemperatur der wässrigen Polymerdispersionen noch gut einer Verformung durch Falten, Rillieren oder Plissieren unterziehen lassen. Nach der anschließenden thermischen Aushärtung (Tempern) verleihen die Polydispersionen den dadurch erhaltenen ebenfalls erfindungsgemäßen Filtermaterialien, im wesentlichen Filterpapiere oder Filtergewebe, eine hohe Formstabilität. Diese Eigenschaft ermöglicht die Herstellung von Halbzeugen und damit die Auftrennung des Herstellungsprozesses in einzelne voneinander entkoppelte Produktionsschritte.

### Beispiele

### I. Herstellung einer erfindungsgemäß zu verwendenden Polymerdispersion

### Beispiel 0 (Herstellung des carboxylgruppenhaltigen Polymerisats A2)

In einem Druckreaktor mit Ankerrührer wurden 0,55 kg vollentsalztes Wasser, 0,36 kg Maleinsäureanhydrid sowie 0,91 kg einer 40 gew.-%igen wässrigen Lösung eines ethoxylierten Oleylamins (mittlerer Ethoxylierungsgrad = 12, z.B. Lutensol FA Marken der Fa. BASF AG) vorgelegt. Unter Stickstoffatmosphäre wurde auf 125°C erwärmt. Nach Erreichen dieser Temperatur wurde innerhalb von 4 h Zulauf 1, bestehen aus 0,75 kg vollentsalztes Wasser und 1,00 kg Acrylsäure sowie innerhalb von 5 h Zulauf 2, bestehend aus 0,22 kg vollentsalztes Wasser und 0,12 kg H₂O₂ (30 gew.-%ig) gleichmäßig zudosiert. Nach Ende von Zulauf 1 wurden weitere 0,11 kg vollentsalztes Wasser zugegeben. Nach Ende der Reaktion wurde auf Raumtemperatur abgekühlt. Die so erhaltene wäßrige Polymerisat-Lösung hat einen Feststoffgehalt von 43,0 %, einen pH-Wert von 1,7 und eine Viskosität von 450 mPas. Der K-Wert (K-Wert-Bestimmung und Fikentscher) beträgt 13,3.

Die nichtflüchtigen Anteile (FG = Feststoffgehalt) wurden in einem Umluft-Trockenschrank bestimmt aus dem Gewichtsverlust einer 1 g Probe, die zwei Stunden lang bei 120°C getrocknet wurde.

Die Viskosität der Dispersionen wurde in einem Rheomat der Fa. Physica bei einer Schergeschwindigkeit von 250 s⁻¹ gemäß DIN 53019 bei 23°C bestimmt. Der K-Wert wurde gemäß DIN 53276 und Fikentscher ermittelt.

Der pH-Wert wurde mit einem handylab 1 pH-Meter der Fa. Schott bestimmt.

### Beispiel 1 (B1)

In einem 4 l Glasgefäß mit Ankerrührer (120 Upm) wurden 372 g Wasser und 10 Gew.-% eines Zulaufs 4 vorgelegt und auf 85°C erhitzt. Nach 2 min wurden bei dieser Temperatur ein Zulauf 3 innerhalb von 3 h und die Restmenge von Zulauf 4 innerhalb von 3,5 h räumlich getrennt zudosiert. Anschließend wurde noch 30 min bei dieser Temperatur nachpolymerisiert und das Reaktionsgemisch abgekühlt. Die so hergestellte Polymer-Dispersion enthielt 50,3 Gew.-% nichtflüchtige Anteile und hat einen pH-Wert von 2,1. Die Viskosität der erhaltenen Polymer-Dispersion beträgt 982 mPas (250 s⁻¹). Anschließend wurden 314 g einer wässrigen Lösung (50 Gew.-%) von 2,2',2"-Nitrilo-triethanol zugegeben. Der pH-Wert der Mischung wird mit wässriger NH₃-Lösung auf pH = 6,0 eingestellt.

### Zulauf 3:

1308 g des carboxylgruppenhaltigen Polymer aus Beispiel 0 (43 gew.-%ig)
525 g Styrol
188 g Methylmethacrylat
38 g 2-Hydroxyethylacrylat

### Zulauf 4:

1003 g vollentsalztes Wasser
7,5 g Natriumperoxodisulfat

Die Beispiele 2 bis 4 wurden analog zu Beispiel 1 mit den angegebenen Polymer/Monomerkombinationen hergestellt, d.h. es wurde in Anwesenheit des carboxylgruppenhaltigen Polymere A₂ von Beispiel 0 das angegebene Copolymer hinzupolymerisiert (Tabelle I)

**Tabelle I**

| Copolymer | A2 [pphm] | Tg (calc.) [°C] | FG [%] | Viskosität [mPas, 250 s⁻¹] | pH-Wert |
|---|---|---|---|---|---|
| Beispiel 1 (B1) (70S/25MMA/5HEA) | 100 | 96 | 51,7 | 541 | 3,6 |
| Beispiel 2 (B2) (95BA/5HEA) | 100 | -43 | 51,2 | 924 | 3,6 |
| Beispiel 3 (B3) (50S/45BA/5HEA) | 100 | 14 | 51,1 | 819 | 3,5 |
| Beispiel 4 (B4) (50S/45BA/5HEA) | 25 | 14 | 49,5 | 179 | 3,5 |

### Abkürzungen:

S: Styrol
MMA: Methylmethacrylat
HEA: Hydroxyethylacrylat
BA: n-Butylacrylat
A₂ [pphm]: parts per hundred monomers, Anteil Polymerisat A2 relativ zu A1
Tg (calc.): errechnete Glastemperatur
FG: Feststoffgehalt

### II. Beleimung von Filterpapieren mit Hilfe der aus Abschnitt I erhaltenen Polymerdispersion

Mit den so hergestellten Polymerdispersionen wurden Filterpapiere im Tränkverfahren beleimt (Papierqualität 105 g/m², Auftragsgewicht 20 Gew.-%), fünf Minuten bei 50°C getrocknet und anschließend drei Minuten bei 180°C getempert. Die Luftdurchlässigkeit wurde mittels eines Akustrons der Fa. W. Westerteiger Messgeräte Akustron in Anlehnung an DIN 53887 bzw. DIN 53120 u. ISO 9237 bestimmt. Die Reißfestigkeit (Höchstzugkraft) wurde mittels eines Zugprüfgerätes der Fa. Zwick, Typ Z 2,5/TN1S bestimmt. Der Berstdruck wurde gemäß ISO 2758 bestimmt.

In der nachfolgenden Tabelle II sind für die erfindungsgemäßen Beispiele 1 und 3 im Vergleich zu Rohpapier und mit einem Bindemittel-Standard (Bakelite 9599), der Berstdruck nach DIN ISO 2758 und die Luftdurchlässigkeit der hergestellten Filtermaterialien wiedergegeben.

### Dabei bedeutet

| | |
|---|---|
| + 30 % ff Epoxy: | zusätzlich 30 Gew.-% einer Epoxydispersion |
| + 30 % ff PU: | zusätzlich 30 Gew.-% einer Polyurethandispersion |
| + 1 % ff Silan: | zusätzlich 1 Gew.-% eines Aminopropyltrimethoxysilans |

Mit den so hergestellten erfindungsgemäßen Dispersionen wurden Filterpapiere im Tränkverfahren beleimt (Papierqualität 105 g/m², Auftragsgewicht 20 Gew-%), fünf Minuten bei 50°C getrocknet und anschließend drei Minuten bei 180°C getempert.

Die Luftdurchlässigkeit wurde mittels eines Akustrons der Fa. Firma W. Westerteiger Messgeräte Akustron in Anlehnung an DIN 53887 bzw. DIN 53120 und ISO 9237 bestimmt. Die Reissfestigkeit (Höchstzugkraft) wurde mittels eines Zugprüfgerätes der Fa. Zwick -Typ Z 2,5/TN1S bestimmt. Der Berstdruck wurde gemäß ISO 2758 bestimmt.

Tabelle 2 zeigt einen Vergleich eines Standardbindemittels (PF-Harz) mit den erfindungsgemäßen Beispielen und deren Abmischungen mit verschiedene Zuschlagstoffen;*) Epoxy = Epoxydharz vom Bispohenol-A-Typ,**) PU = Polyurethandispersion, Emuldur DS 2361,***) Silan = funktionalisierte Silankomponente Silquest A-1100

**Tabelle II**

| **Produktbez.:** | Rohpapier | Rohpapier | Bakelite 9599 | B1 | B3 | Beis. 1 +30% f/f Epoxy* | Beisp. 1 +30% f/f PU** | Beisp. 1 +1% f/f Silan*** | Beisp. 3 +30% f/f Epoxy* | Beisp. 3 +30% f/f PU** | Beisp. 3 + 1% f/f Silan*** |
|---|---|---|---|---|---|---|---|---|---|---|---|
| **Filtermaterialprüfungen** | | | | | | | | | | | |
| Methanolanteil [%] | | 100 | 100 | 80 | 80 | 80 | 80 | 80 | 80 | 80 | 80 |
| Trocknung 5min bei 59°C, Härtung 3min bei 180°C | \| | \| | \| | \| | \| | \| | \| | \| | \| | \| | \| |
| **Berstdruck** | **45** | **45** | **303** | **300** | **339** | **370** | **311** | **318** | **386** | **371** | **347** |
| Trocken (KPa) | | | | | | | | | | | |

| **Luftdurchlässigkeit Akustron** | | | | | | | | | | | |
|---|---|---|---|---|---|---|---|---|---|---|---|
| Trocken (mm/s) | **971** | **971** | **986** | **927** | **958** | **845** | **934** | **953** | **953** | **953** | **942** |

Mit den erfindungsgemäßen Bindemitteln wird im Vergleich zu PF-Harzen bereits nach der Trocknung (ohne Härtung) eine hohe Trockenfestigkeit der Filtermaterialien erzielt. Die Härtung zu einem späteren Zeitpunkt (z.B. nach Weiterverarbeitungsschritten) erfolgen, wobei ein gleichermaßen hohes Festigkeitniveau erzielt wird wie nach unmittelbarer Härtung (Tabelle 3)

In der Tabelle III sind für die erfindungsgemäßen Beispiele 1 und 3 weitere Ergebnisse des Berstdruckes angegeben.

**Tabelle III**

| **Produktbezeichnung:** | **B3** | **B3** | **Bakelite 9599** |
|---|---|---|---|
| Disp.nummer: | | | |
| **Filtermaterialprüfungen** | **Filterpapier 105 g/m²** | | |
| Methanolanteil in % | | | |
| Trocknung 5 min 50°C | 80 | 80 | 100 |
| Härtung 3 min 180°C | | | |

| **Berstdruck** | | | |
|---|---|---|---|
| 5 min 50°C (KPa) | 300 | 300 | 147 |

| **Berstdruck** | | | |
|---|---|---|---|
| Härtung 3 min 180°C nach | 294 | | 320 |
| 4 Wochen Lagerung bei RT (KPa) | | 315 | |

Tabelle 4 verdeutlicht, dass die erfindungsgemäßen Polymerdispersionen auch unter Verzicht auf organische Solventien wie Methanol aus wässriger Phase appliziert werden können.

Gelegentlich beobachtet man bei cellulosehaltigen Filtermaterialien einen Abfall der Festigkeit bei Langzeit- oder Wärmelagerung. Bei Anwendung der erfindungsgemäßen Bindemittel innerhalb eines bestimmten pH-Bereichs, bevorzugt pH 3-8, besonders bevorzugt pH 3,5-6,5 kann dem Abfall des Berstdrucks bei Wärmelagerung entgegengewirkt werden. Die Einstellung des pH-Wertes kann mit Hilfe flüchtiger und/oder nichtflüchtiger organischer und/oder anorganischer Basen erfolgen, bevorzugt sind jedoch nichtflüchtige organische und/oder anorganische Basen (z.B. NaOH, KOH, N(CH₂CH₂OH)₃, N(CH₂CH₃)₃), N(CH₂CH₃)₂, N(CH₂CH₃) .

**Tabelle 4**

| **Produktbezeichnung:** | **B1** | **B3** | **B1+NaOH** | **B3+NaOH** |
|---|---|---|---|---|
| **Filtermaterialprüfungen** | | | | |
| pH-Wert in Wasser | 3,6 | 3,5 | 6 | 6 |
| Auftrag aus wässriger Phase, Trocknung 5 min bei 50°C, Härtung 3 min bei 180°C | \| | \| | \| | \| |
| **Berstdruck** | 218 | 220 | 273 | 231 |
| Trocken (KPa) | | | | |
| **Berstdruck** | 98 | 99 | 170 | 171 |
| Nach 24h bei 160°C (KPa) | | | | |

## Patentansprüche

1. Verwendung einer wäßrigen Polymerdispersion, enthaltend dispergierte Polymerteilchen mindestens eines Polymerisats A1, das erhältlich ist durch radikalische Emulsionspolymerisation in Gegenwart eines Polymerisats A2, das aufgebaut ist aus
- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers als Bindemittel für die Herstellung von Filtermaterialien.

2. Verwendung einer wäßrigen Polymerdispersion nach Anspruch 1, wobei das Polymerisat A2 als ethylenisch ungesättigte Mono- und/oder Dicarbonsäure mindestens eine Verbindung enthält, die ausgewählt ist unter C₃-C₁₀-Monocarbonsäuren und C₄-C₈-Dicarbonsäuren.

3. Verwendung einer wässrigen Polymerdispersion nach einem der Ansprüche 1 oder 2, wobei das mindestens eine Hydroxylgruppe aufweisende Amin ausgewählt ist unter Aminen der allgemeinen Formel (I)
R^{c}NR^{a}R^{b} (I)
wobei
R^{c} für C₆- bis C₂₂-Alkyl, C₆- bis C₂₂-Alkenyl, Aryl-C₆-C₂₂-alkyl oder Aryl-C₆-C₂₂-alkenyl steht, wobei der Alkenylrest 1,2 oder 3 nicht benachbarte Doppelbindungen aufweisen kann,
R^{a} für Hydroxy-C₁-C₆-alkyl oder einen Rest der Formel II
-(CH₂CH₂O)ₓ(CH₂CH(CH₃)O)_{y}-H (II)
steht, wobei
in der Formel II die Reihenfolge der Alkylenoxideinheiten beliebig ist und x und y unabhängig voneinander für eine ganze Zahl von 0 bis 100 stehen, wobei die Summe aus x und y > 1 ist,
R^{b} für Wasserstoff, C₁- bis C₂₂-Alkyl, Hydroxy-C₁-C₆-alkyl, C₆- bis C₂₂-Alkenyl, Aryl-C₆-C₂₂-alkyl, Aryl-C₆-C₂₂-alkenyl oder C₅- bis C₈-Cycloalkyl steht, wobei der Alkenylrest 1,2 oder 3 nicht benachbarte Doppelbindungen aufweisen kann,
oder R^{b} für einen Rest der Formel III
-(CH₂CH₂O)ᵥ(CH₂CH(CH₃)O)_{w}-H (III)
steht, wobei
in der Formel III die Reihenfolge der Alkylenoxideinheiten beliebig ist und v und w unabhängig voneinander für eine ganze Zahl von 0 bis 100 stehen,
und Mischungen davon.

4. Verwendung einer wäßrigen Polymerdispersion nach einem der Ansprüche 1 bis 3, wobei das Gewichtsverhältnis auf Feststoffbasis von Polymerisat A1 zu Polymerisat A2 im Bereich von 9:1 bis 1:9, vorzugsweise 3:1 bis 1:3, liegt.

5. Verwendung einer wäßrigen Polymerdispersion nach einem der Ansprüche 1 bis 4, wobei noch ein Alkanolamin mit mindestens zwei Hydroxylgruppen als Vernetzer hinzugefügt wird.

6. Verwendung einer wässrigen Polymerdispersion nach einem der Ansprüche 1 bis 5, wobei die wässrige Polymerdispersion nach ihrer Herstellung durch Zugabe von anorganischen oder organischen Basen auf einen pH-Wert von 2 bis 8 eingestellt wird.

7. Verwendung einer wässrigen Polymerdispersion nach einem der Ansprüche 1 bis 6, wobei die wässrige Polymerdispersion mit einer oder mehrerer organischer oder anorganischer Mischungskomponenten gemischt wird.

8. Verwendung einer wässrigen Polymerdispersion nach einem der Ansprüche 1 bis 7, wobei die wässrige Polymerdispersion durch Beleimen nach dem Tränkverfahren auf die Filtermaterialien aufgebracht wird.

9. Verwendung einer wässrigen Polymerdispersion nach einem der Ansprüche 1 bis 8, wobei die wässrige Polymerdispersion nach dem Beleimen der Filtermaterialien noch 0,1 bis 60 Minuten lang bei Temperaturen von 100 bis 250°C getempert wird.

10. Verwendung einer wässrigen Polymerdispersion nach einem der Ansprüche 1 bis 9 als Bindemittel für die Herstellung von Filtermaterialien.

11. Filtermaterialien, enthaltend eine wässrige Polymerdispersion gemäß den Ansprüchen 1 bis 9.

## Claims

1. The use of an aqueous polymer dispersion comprising dispersed particles of at least one polymer A1 obtainable by free-radical emulsion polymerization in the presence of a polymer A2 synthesized from
- from 50 to 99.5% by weight of at least one ethylenically unsaturated monocarboxylic and/or dicarboxylic acid,
- from 0.5 to 50% by weight of at least one ethylenically unsaturated compound selected from the esters of ethylenically unsaturated monocarboxylic acids and the monoesters and diesters of ethylenically unsaturated dicarboxylic acids with an amine containing at least one hydroxyl group,
- up to 20% by weight of at least one further monomer
as a binder for producing filter materials.

2. The use of an aqueous polymer dispersion according to claim 1, wherein the polymer A2 comprises as ethylenically unsaturated monocarboxylic and/or dicarboxylic acid at least one compound selected from C₃-C₁₀ monocarboxylic acids and C₄-C₈ dicarboxylic acids.

3. The use of an aqueous polymer dispersion according to either of claims 1 and 2, wherein the amine containing at least one hydroxyl group is selected from amines of the formula (I)
R^{c}NR^{a}R^{b} (I)
where
R^{c} is C₆ to C₂₂ alkyl, C₆ to C₂₂ alkenyl, aryl-C₆-C₂₂ alkyl or aryl-C₆-C₂₂ alkenyl, the alkenyl radical having 1, 2 or 3 nonadjacent double bonds,
R^{a} is hydroxy-C₁-C₆ alkyl or a radical of the formula II
-(CH₂CH₂O)ₓ(CH₂CH(CH₃)O)_{y}-H (II)
where
in the formula II the sequence of the alkylene oxide units is arbitrary and x and y independently are an integer from 0 to 100, the sum of x and y being > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, the alkenyl radical having 1, 2 or 3 nonadjacent double bonds,
or R^{b} is a radical of formula III
-(CH₂CH₂O)ᵥ(CH₂CH(CH₃)O)_{w}-H (III)
where
in the formula III the sequence of the alkylene oxide units is arbitrary and v and w independently are an integer from 0 to 100,
and mixtures thereof.

4. The use of an aqueous polymer dispersion according to any of claims 1 to 3, wherein the weight ratio of polymer A1 to polymer A2, based on solids, is from 9:1 to 1:9, preferably from 3:1 to 1:3.

5. The use of an aqueous polymer dispersion according to any of claims 1 to 4, wherein additionally an alkanolamine having at least two hydroxyl groups is added as crosslinker.

6. The use of an aqueous polymer dispersion according to any of claims 1 to 5, wherein following its preparation the aqueous polymer dispersion is adjusted to a pH of from 2 to 8 by addition of organic or inorganic bases.

7. The use of an aqueous polymer dispersion according to any of claims 1 to 6, wherein the aqueous polymer dispersion is a mixture of one or more organic or inorganic co-components.

8. The use of an aqueous polymer dispersion according to any of claims 1 to 7, wherein the aqueous polymer dispersion is applied to the filter materials by resinating in accordance with the impregnating method.

9. The use of an aqueous polymer dispersion according to any of claims 1 to 8, wherein after the filter materials have been resinated the aqueous polymer dispersion is additionally heated at from 100 to 250°C for from 0.1 to 60 minutes.

10. The use of an aqueous polymer dispersion according to any of claims 1 to 9 as a binder for producing filter materials.

11. Filter materials comprising an aqueous polymer dispersion as set forth in any of claims 1 to 9.

## Revendications

1. Utilisation d'une dispersion aqueuse de polymère, contenant des particules polymères dispersées d'au moins un polymère A1, qui peut être obtenu par polymérisation en émulsion radicalaire en présence d'un polymère A2, qui est formé par :
- 50 à 99,5 % en poids d'au moins un acide mono- et/ou dicarboxylique éthyléniquement insaturé,
- 0,5 à 50 % en poids d'au moins un composé éthyléniquement insaturé, qui est choisi parmi les esters d'acides monocarboxyliques éthyléniquement insaturés et les semi-esters et diesters d'acides dicarboxyliques éthyléniquement insaturés avec une amine comprenant au moins un groupe hydroxyle,
- jusqu'à 20 % en poids d'au moins un autre monomère en tant que liant pour la fabrication de matériaux de filtration.

2. Utilisation d'une dispersion aqueuse de polymère selon la revendication 1, dans laquelle le polymère A2 contient en tant qu'acide mono- et/ou dicarboxylique éthyléniquement insaturé au moins un composé qui est choisi parmi les acides monocarboxyliques en C₃-C₁₀ et les acides dicarboxyliques en C₄-C₈.

3. Utilisation d'une dispersion aqueuse de polymère selon l'une quelconque des revendications 1 ou 2, dans laquelle l'amine comprenant au moins un groupe hydroxyle est choisie parmi les amines de formule générale (I)
R^{c}NR^{a}R^{b} (I)
dans laquelle
R^{c} représente alkyle en C₆ à C₂₂, alcényle en C₆ à C₂₂, aryl-alkyle en C₆-C₂₂ ou aryl-alcényle en C₆-C₂₂, le radical alcényle pouvant comprendre 1, 2 ou 3 doubles liaisons non voisines,
R^{a} représente hydroxy-alkyle en C₁-C₆ ou un radical de formule II
-(CH₂CH₂O)ₓ(CH₂CH(CH₃)O)_{y}-H (II)
dans la formule II, l'ordre des unités oxyde d'alkylène étant quelconque, et x et y représentant indépendamment l'un de l'autre un nombre entier de 0 à 100, la somme de x et y étant > 1,
R^{b} représente hydrogène, alkyle en C₁ à C₂₂, hydroxy-alkyle en C₁-C₆, alcényle en C₆ à C₂₂, aryl-alkyle en C₆-C₂₂, aryl-alcényle en C₆-C₂₂ ou cycloalkyle en C₅ à C₈, le radical alcényle pouvant comprendre 1, 2 ou 3 doubles liaisons non voisines,
ou R^{b} représente un radical de formule III
-(CH₂CH₂O)ᵥ(CH₂CH(CH₃)O)_{w}-H (III)
dans la formule III, l'ordre des unités oxyde d'alkylène étant quelconque, et v et w représentant indépendamment l'un de l'autre un nombre entier de 0 à 100,
et leurs mélanges.

4. Utilisation d'une dispersion aqueuse de polymère selon l'une quelconque des revendications 1 à 3, dans laquelle le rapport en poids en termes de solides entre le polymère A1 et le polymère A2 se situe dans la plage allant de 9:1 à 1:9, de préférence de 3:1 à 1:3.

5. Utilisation d'une dispersion aqueuse de polymère selon l'une quelconque des revendications 1 à 4, dans laquelle une alcanolamine contenant au moins deux groupes hydroxyle est en outre ajoutée en tant qu'agent de réticulation.

6. Utilisation d'une dispersion aqueuse de polymère selon l'une quelconque des revendications 1 à 5, dans laquelle la dispersion aqueuse de polymère est ajustée après sa fabrication à un pH de 2 à 8 par ajout de bases inorganiques ou organiques.

7. Utilisation d'une dispersion aqueuse de polymère selon l'une quelconque des revendications 1 à 6, dans laquelle la dispersion aqueuse de polymère est mélangée avec un ou plusieurs composants de mélange organiques ou inorganiques.

8. Utilisation d'une dispersion aqueuse de polymère selon l'une quelconque des revendications 1 à 7, dans laquelle la dispersion aqueuse de polymère est appliquée par collage sur les matériaux de filtration après le procédé d'imprégnation.

9. Utilisation d'une dispersion aqueuse de polymère selon l'une quelconque des revendications 1 à 8, dans laquelle la dispersion aqueuse de polymère est encore recuite pendant 0,1 à 60 minutes à des températures de 100 à 250 °C après le collage des matériaux de filtration.

10. Utilisation d'une dispersion aqueuse de polymère selon l'une quelconque des revendications 1 à 9 en tant que liant pour la fabrication de matériaux de filtration.

11. Matériaux de filtration, contenant une dispersion aqueuse de polymère selon les revendications 1 à 9.
